# FASCICULE DE BREVET EUROPEEN

(11) **EP 3 857 825 B1**
(45) Date de publication et mention de la délivrance du brevet: **14.08.2024**
(21) Numéro de dépôt: 19795263.3
(22) Date de dépôt: 25.09.2019
(51) Int. Cl.: H04L 43/0829, H04L 43/0864, H04L 43/16

(54) **PROCÉDÉ ET SYSTÈME DE SURVEILLANCE D'UNE CONNEXION ENTRE DEUX ÉQUIPEMENTS D'EXTREMITÉS, PRODUIT PROGRAMME D'ORDINATEUR CORRESPONDANT**
VERFAHREN UND SYSTEM ZUR ÜBERWACHUNG EINER VERBINDUNG ZWISCHEN ZWEI ENDGERÄTEN, ENTSPRECHENDES COMPUTERPROGRAMMPRODUKT
METHOD AND SYSTEM FOR MONITORING A CONNECTION BETWEEN TWO TERMINAL EQUIPMENT ITEMS, CORRESPONDING COMPUTER PROGRAM PRODUCT

(30) Priorité: 28.09.2018 FR 1858990
(43) Date de publication de la demande: 04.08.2021
(73) Titulaire: Orange, 92130 Issy-les-Moulineaux (FR)
(72) Inventeur: LE MAIGAT, Pierre, 92326 CHÂTILLON CEDEX (FR); HOUDOIN, Thierry, 92326 CHÂTILLON CEDEX (FR); STEPHAN, Emile, 92326 CHÂTILLON CEDEX (FR)
(74) Mandataire: Vidon Brevets & Stratégie
(86) Numéro de dépôt international: PCT/FR2019/052252
(87) Numéro de publication internationale: WO 2020/065212

(56) Documents cités:
- TRAMMELL B ET AL: "Adding Explicit Passive Measurability of Two-Way Latency to the QUIC Transport Protocol; draft-trammell-quic-spin-03.txt", ADDING EXPLICIT PASSIVE MEASURABILITY OF TWO-WAY LATENCY TO THE QUIC TRANSPORT PROTOCOL; DRAFT-TRAMMELL-QUIC-SPIN-03.TXT; INTERNET-DRAFT: QUIC, INTERNET ENGINEERING TASK FORCE, IETF; STANDARDWORKINGDRAFT, INTERNET SOCIETY (ISOC) 4, RUE DES FALAISES C, no. 3, 14 May 2018 (2018-05-14), pages 1 - 24, XP015126398

## Description

### 1. DOMAINE TECHNIQUE

Le domaine de l'invention est celui des réseaux de communication.

Plus précisément, l'invention concerne un procédé de surveillance d'une connexion entre deux équipements d'extrémités via un réseau de communication.

Dans la présente description, on entend par surveillance d'une connexion tous types d'opérations permettant de mesurer des performances, et éventuellement d'effectuer des dépannages, sur cette connexion.

L'invention s'applique notamment, mais non exclusivement, dans un contexte où le protocole de transport QUIC (« Quick UDP Internet Connections ») est implémenté. Il s'agit d'un protocole de la couche transport du modèle OSI (« Open Systems Interconnections »).

### 2. ARRIÈRE PLAN TECHNOLOGIQUE

On s'attache plus particulièrement dans la suite de ce document à décrire la problématique existant dans un contexte où le protocole de transport QUIC est implémenté. L'invention ne se limite bien sûr pas à ce contexte particulier d'application, mais présente un intérêt pour toute technique de surveillance de réseau (au sens précité) devant faire face à une problématique proche ou similaire.

Le protocole QUIC émule les protocoles TCP (« Transmission Control Protocol ») et TLS (« Transport Layer Security ») au-dessus du protocole UDP (« User Datagram Protocol »). Il chiffre donc les données applicatives comme le font les protocoles HTTPS (« HyperText Transfer Protocol Secure »), TLS et DTLS (« Datagram Transport Layer Security »). Il diffère du protocole TCP notamment sur deux aspects :
- contrairement au protocole TCP, le protocole QUIC chiffre les données de l'entête de la couche transport. Par conséquent, les équipements de réseau (aussi appelés équipements intermédiaires ou « network middleboxes » en anglais) ne peuvent plus mesurer les délais RTT ou demi-RTT à partir de l'observation des acquittements de la réception des paquets (RTT, pour « Round Trip Time » en anglais, est le temps d'aller-retour entre deux équipements d'extrémités) ; et
- le protocole QUIC garantit le transport des données en retransmettant les données dans des paquets numérotés de manière monotone (retransmission des données avec le numéro de paquet courant) et indifférenciable des paquets non retransmis. Par conséquent, les équipements de réseau ne peuvent plus identifier et compter les retransmissions de données non reçues, ni les pertes de paquets.

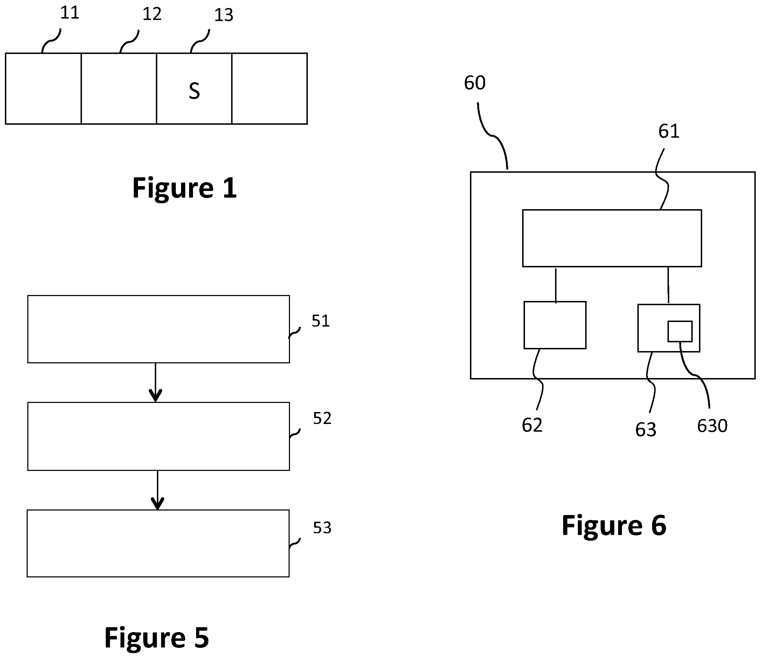

Afin de pallier ces inconvénients pour les équipements de réseau, la spécification du protocole QUIC réserve 1 bit, nommé « S » et appelé « spin bit », dans l'entête des paquets QUIC. La figure 1A, illustre de manière générique l'en-tête d'un paquet QUIC comprenant notamment des premier et deuxième champs chiffrés 11, 12, suivis du champ « spin bit » non chiffré et pouvant de ce fait être utilisé comme un bit de métrologie. Il est dédié à l'expérimentation de techniques de surveillance par les équipements de réseau présents sur le chemin d'une connexion QUIC. C'est un premier niveau de coopération entre les équipements de réseau et les équipements d'extrémités.

La spécification détaillée de l'usage du spin bit est en cours de discussion. Une équipe (« design Team ») a été créée, au sein du groupe de travail « WG QUIC » de l'IETF (« Internet Engineering Task Force »), pour traiter du sujet. Deux points semblent acquis :
- le spin bit sera utilisé pour marquer des paquets afin de mesurer les RTT ou demi-RTT. Il est utilisable pour la gestion active des files d'attente (AQM pour « Active Queue Management » en anglais) et pour permettre aux opérateurs de réseaux d'effectuer un minimum d'observations ;
- le mécanisme du spin bit sera activé optionnellement quand ce sera nécessaire, à la discrétion des équipements d'extrémité.

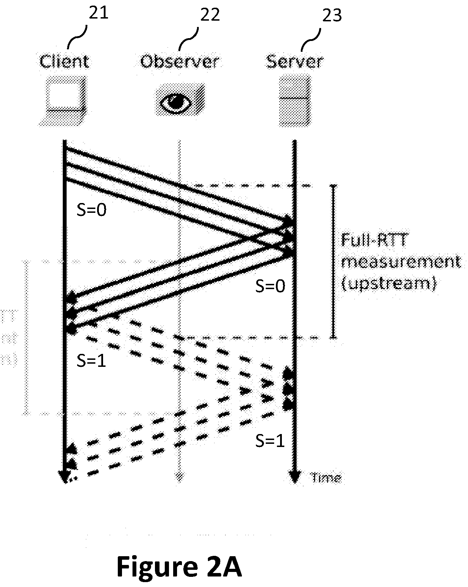

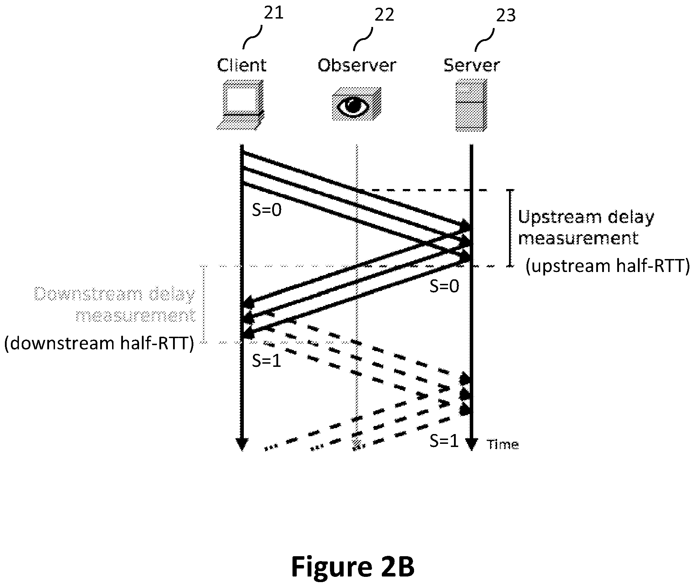

Comme décrit dans le document de travail de l'IETF intitulé « Enabling Internet Measurement with the QUIC Spin Bit » en date du 15 mai 2018 (disponible à l'URL « https://www.ietfjournal.org/enabling-intemet-measurement-with-the-quic-spin-bit/ »), et illustré sur les **figures 2A** **et** **2B****,** la valeur du spin bit est modifiée une fois par temps d'aller/retour (RTT) de bout en bout entre le client 21 et le serveur 23. Chaque transition du spin bit de 0 à 1 ou de 1 à 0 correspond à un front montant ou descendant (ou « edge » en anglais.

La figure 2A est une représentation schématique de mesures RTT complètes (en amont et en aval) par un équipement de réseau (observateur) 22 sur le chemin établi pour le transfert de données entre le client 21 et le serveur 23. L'équipement de réseau 22 mesure la durée (sur son horloge locale) entre ces fronts pour générer une estimation du RTT. Il peut le faire en observant le flux dans le sens client vers serveur, on parle alors de mesure RTT complète en amont (« upstream RTT »). Il peut aussi le faire en observant le flux dans le sens serveur vers client, on parle alors de mesure RTT complète en aval (« downstream RTT »). Ces estimations du RTT peuvent ensuite être agrégées et analysées pour identifier les points critiques de latence dans un réseau.

La figure 2B est une représentation schématique de mesures de demi-RTT (en amont et en aval) par un équipement de réseau (observateur) 22 sur le chemin entre le client 21 et le serveur 23. L'équipement de réseau 22 mesure la durée (sur son horloge locale) entre deux valeurs identiques du spin bit, chacune dans un sens distinct). Il peut le faire en observant le flux d'abord dans le sens client vers serveur puis dans le sens serveur vers client, on parle alors de mesure demi-RTT en amont (« upstream half-RTT »). Il peut aussi le faire en observant le flux d'abord dans le sens serveur vers client puis dans le sens client vers serveur, on parle alors de mesure demi-RTT en aval (« downstream half-RTT »).

Le document de travail précité décrit également une variante dans laquelle le mécanisme « spin bit » est couplé à un mécanisme « VEC » (pour « Valid Edge Counter », ou compteur de front valide) utilisant deux bits supplémentaires, afin de fournir une résolution plus élevée des problèmes de latence dans un réseau.

Tel qu'envisagé actuellement, le mécanisme « spin bit » présente deux inconvénients majeurs.

Un premier inconvénient est que le mécanisme « spin bit » est activé optionnellement, à la discrétion des équipements d'extrémité. Les valeurs de délai (notamment de RTT) seront donc rarement observables ou mesurables. Le mécanisme « spin bit » ne permet donc qu'un faible niveau de coopération entre les équipements d'extrémité et l'équipement intermédiaire, puisque l'équipement intermédiaire est passif (il ne peut pas décider de l'activation du mécanisme ni envoyer d'indications aux équipements d'extrémité).

Un deuxième inconvénient est que le mécanisme « spin bit » (qu'il soit utilisé seul ou en combinaison avec le mécanisme « VEC ») a uniquement pour but de permettre la mesure de délais (RTT et demi-RTT en particulier). Il ne permet pas d'autres types de mesure et ceux-ci nécessitent donc d'autres mécanismes. Par exemple, la mesure de perte de paquets nécessite d'utiliser un autre mécanisme, distinct du mécanisme « spin bit », par exemple le mécanisme de marquage alternatif appelé « Alternate Marking (Coloring) technique », décrit notamment dans le document de travail de l'IETF intitulé « Alternate Marking method for passive and hybrid performance monitoring » en date du 28 décembre 2017 (disponible à l'URL « https://tools.ietf.org/html/draft-ietf-ippm-alt-mark-05 »).

Le document intitulé "Adding Explicit Passive Measurability of two-way latency to the QUIC transport protocol" en date du 14 mai 2018 décrit plusieurs modes de surveillance (un mode basé uniquement sur le "spin bit", un mode basé sur une combinaison du "spin bit" et du "VEC", un mode "Handshake RTT measurement", un mode "parallel active masurement" et un mode "frequency analysis").

Il n'existe pas aujourd'hui de solution simple permettant à un équipement intermédiaire d'effectuer plusieurs fonctions de surveillance, a fortiori en étant actif dans la coopération avec les équipements d'extrémité.

Les inconvénients définis ci-dessus pour le mécanisme « spin bit » du protocole QUIC peuvent être généralisés à tout contexte dans lequel un protocole (par exemple d'une des couches 2 (liaison), 3 (réseau), 4 (transport) ou 7 (application) du modèle OSI) prévoit le chiffrement des données de contrôle à l'exception d'un ou quelques bit(s) lisibles par les équipements intermédiaires pour effectuer une ou plusieurs fonctions de surveillance.

### 3. RÉSUMÉ

Dans un mode de réalisation particulier de l'invention, il est proposé un procédé de surveillance d'une connexion entre des équipements d'extrémités via un réseau de communication selon la revendication 1.

Un ensemble de modes, comprenant au moins deux modes de surveillance, et un ordre de classement associé audit ensemble de modes, sont convenus entre les équipements d'extrémités et un équipement intermédiaire présent sur un chemin entre les équipements d'extrémités, ledit ordre de classement étant de type aléatoire ou prédéterminé. Le procédé comprend : une activation initiale dudit ensemble de modes, correspondant à une activation du premier mode selon ledit ordre de classement ; puis une activation, selon ledit ordre de classement, de chaque autre mode dudit ensemble de modes correspondant à un passage d'un mode à l'autre dudit ensemble selon ledit ordre de classement.

Chaque mode de surveillance comprend au moins un mécanisme mis en oeuvre par au moins un des équipements d'extrémité et permettant audit équipement intermédiaire d'effectuer au moins une fonction de surveillance de ladite connexion.

Le principe général de l'invention consiste donc à utiliser un ensemble de modes (comprenant au moins deux modes de surveillance) et un ordre de classement associé, qui sont connus des deux équipements d'extrémités et de l'équipement intermédiaire. L'activation de cet ensemble de modes et le contrôle de son cycle de vie (c'est-à-dire le passage de l'un à l'autre des modes selon l'ordre de classement associé) permettent d'obtenir une séquence de différents modes (y compris les au moins deux modes de surveillance).

Ainsi, il est aisé, côté réseau, d'effectuer plusieurs types de mesure de surveillance (par exemple mesure de délais, mesure de pertes de paquets, mesure de qualité de service (QoS), mesure de qualité d'expérience (QoE), etc.).

Ceci permet également d'augmenter le niveau de coopération entre les équipements d'extrémité et l'équipement intermédiaire, puisque l'équipement intermédiaire peut être actif. Il peut activer l'ensemble de modes et/ou le passage d'un mode à l'autre de cet ensemble.

En outre, cette coopération peut aisément être modifiée (il suffit de changer l'ensemble de modes et/ou l'ordre de classement associé). Cette coopération peut également aisément être automatisée et intégrer des boucles successives (chaque boucle correspondant à un passage, selon l'ordre de classement, par les différents modes).

Le passage, selon l'ordre de classement, par les différents modes se traduit par l'activation de plusieurs mécanismes successivement (voir simultanément pour certains, s'ils sont compris dans le même mode de surveillance).

Selon une caractéristique particulière, au moins un desdits modes de surveillance comprend au moins deux mécanismes mis en oeuvre simultanément par au moins un des équipements d'extrémité, chacun permettant audit équipement intermédiaire d'effectuer au moins une fonction de surveillance distincte.

Ainsi, un ou plusieurs modes de surveillance de l'ensemble peu(ven)t être multimécanismes en combinant des mécanismes pouvant être effectués simultanément.

Selon une caractéristique particulière, ladite au moins une fonction de surveillance appartient au groupe comprenant :
- une mesure d'au moins un délai ;
- une mesure de perte de paquets ;
- une mesure de qualité de service ;
- une mesure de qualité d'expérience ; et
- un envoi d'au moins une indication aux équipements d'extrémités.

De cette façon, il est possible d'obtenir une grande diversité dans les fonctions de surveillance effectuées côté réseau. Cette liste n'est pas exhaustive.

Selon une caractéristique particulière, ledit au moins un mécanisme appartient au groupe comprenant :
- un mécanisme de répétition et d'inversion d'un bit particulier dans un entête de paquet, dans lequel un premier équipement d'extrémité met à un, respectivement zéro, le bit particulier, puis un second équipement d'extrémité répète le bit particulier à un, respectivement zéro, puis le premier équipement d'extrémité inverse la valeur du bit particulier ;
- une combinaison d'un mécanisme donné appartenant au groupe et d'un mécanisme d'insertion supplémentaire d'une indication contextuelle d'applicabilité dudit mécanisme donné ;
- un mécanisme de répétition et d'inversion d'un bit particulier dans un entête de paquet, dans lequel un équipement d'extrémité met à un de manière répétitive, respectivement à zéro, le bit particulier ;
- un mécanisme de désactivation du chiffrement de la numérotation de paquet ;
- dans le cas où ladite connexion est une connexion multi-chemins, un mécanisme d'ajout dans ladite connexion d'un autre chemin entre les équipements d'extrémités qui ne chiffre pas la numérotation de paquet ;
- dans le cas où ladite connexion est une connexion multi-chemins, un mécanisme d'ajout dans ladite connexion d'un autre chemin entre les équipements d'extrémités, un autre ensemble de modes et un autre ordre de classement associé étant convenus, pour ledit autre chemin, entre les équipements d'extrémités et un autre équipement intermédiaire présent sur ledit autre chemin ;
- un mécanisme utilisant au moins un bit dans un entête de paquet pour envoyer au moins une indication de contexte réseau ;
- un mécanisme de surveillance au niveau de la couche de transport ;
- un mécanisme de surveillance au niveau de la couche application ;
- un mécanisme de répétition et d'inversion d'un bit particulier dans un entête de paquet, dans lequel un premier équipement d'extrémité met à un, respectivement zéro, le bit particulier, puis un second équipement d'extrémité répète le bit particulier à un, respectivement zéro, puis le premier équipement d'extrémité répète le bit particulier à un, respectivement zéro, avant de respecter un silence pendant au moins un délai d'aller/retour.

Il est possible de combiner (c'est-à-dire exécuter successivement ou simultanément) des mécanismes (utilisant ou non le spin bit). Cette liste n'est pas exhaustive.

Selon une caractéristique particulière, au moins un desdits modes de surveillance comprend au moins une fonction complémentaire mise en oeuvre par au moins un des équipements d'extrémité.

Ainsi, outre les mécanismes précités, un ou plusieurs modes de surveillance peu(ven)t comprendre une ou plusieurs fonctions complémentaires. Ceci permet d'améliorer la complétude des opérations de surveillance effectuées quand l'ensemble de modes de surveillance est activé.

Selon une caractéristique particulière, ladite au moins une fonction complémentaire appartient au groupe comprenant :
- passage dans un mode où un des équipements d'extrémité jouant un rôle de récepteur ne demande pas une retransmission des données non reçues ;
- passage dans un mode où un des équipements d'extrémité jouant un rôle d'émetteur ne transmet pas des données en attente dans un buffer d'émission et passe aux données suivantes ;
- passage dans un mode où un des équipements d'extrémité jouant un rôle d'émetteur ne transmet pas des données applicatives en attente et passe à des données applicatives suivantes ;
- passage dans un mode où un des équipements d'extrémité jouant un rôle d'émetteur ne transmet pas de données pendant un délai d'aller/retour ; et
- envoi, par un des équipements d'extrémité jouant un rôle d'émetteur, d'une indication d'une augmentation de ressources réseau attribuées.

Cette liste n'est pas exhaustive.

Selon une caractéristique particulière, avant d'être convenus entre les équipements d'extrémités et l'équipement intermédiaire, ledit ensemble de modes et ledit ordre de classement associé sont proposés par un équipement de gestion dudit réseau, lors de l'attachement des équipements d'extrémité audit réseau de communication.

Ainsi, diverses solutions sont envisageables pour proposer ledit ensemble de modes et ledit ordre de classement associé.

Selon une caractéristique particulière, après avoir été proposés, ledit ensemble de modes et/ou ledit ordre de classement associé est (sont) modifié(s) ar au moins un équipement parmi l'équipement de gestion dudit réseau, au moins un des équipements d'extrémités et l'équipement intermédiaire.

Ainsi, plusieurs entités (parmi les deux équipements d'extrémité et l'équipement intermédiaire) peuvent participer au choix final dudit ensemble de modes et dudit ordre de classement associé.

Selon une caractéristique particulière, ledit ensemble de modes et ledit ordre de classement associé sont convenus entre les équipements d'extrémités et l'équipement intermédiaire lors de la connexion entre les équipements d'extrémités, puis enregistrés dans un ticket de session. Ledit ensemble de modes et ledit ordre de classement associé convenus sont réutilisables lors d'une reprise de session ou lors d'une nouvelle session.

La solution proposée est donc compatible avec les tickets de session.

Selon une caractéristique particulière, l'activation dudit ensemble de modes est effectuée par : l'équipement intermédiaire ; ou un des équipements d'extrémités, si au moins une condition d'activation est vérifiée.

Ainsi, diverses solutions sont envisageables pour activer ledit ensemble de modes.

Selon une caractéristique particulière, l'activation dudit ensemble de modes par l'équipement intermédiaire comprend une modification de la valeur d'au moins un bit dans un entête de paquet, ladite modification étant détectable par un des équipements d'extrémités.

De cette façon, dans le cas où l'activation de l'ensemble de modes est effectuée par l'équipement intermédiaire, on utilise astucieusement une inversion de la valeur d'au moins un bit pour réaliser cette activation (l'équipement intermédiaire inverse par exemple la valeur du spin bit, ce qui est une action non prévue dans la spécification actuelle du protocole de transport QUIC).

Selon une caractéristique particulière, ladite au moins une condition d'activation porte sur des données échangées et appartient au groupe comprenant :
- une quantité de données non reçues par un des équipements d'extrémité jouant un rôle de récepteur est supérieure à un premier seuil prédéterminé ;
- une quantité de données retransmises par un des équipements d'extrémité jouant un rôle d'émetteur est supérieure à un deuxième seuil prédéterminé ;
- une information de pré-congestion est détectée par un des équipements d'extrémité ; et
- une quantité de données de contrôle détectées comme corrompues par un des équipements d'extrémité est supérieure à un troisième seuil.

De cette façon, dans le cas où l'activation de l'ensemble de modes est effectuée par un des deux équipements d'extrémité, il existe une grande diversité de conditions d'activation possibles.

Selon une caractéristique particulière, l'activation de chaque autre mode dudit ensemble est effectuée par l'équipement intermédiaire ou un des équipements d'extrémités.

Ainsi, diverses solutions sont envisageables pour activer chaque autre mode dudit ensemble de modes.

Selon une caractéristique particulière, l'activation de chaque autre mode dudit ensemble par l'équipement intermédiaire comprend une modification de la valeur d'au moins un bit dans un entête de paquet, ladite modification étant détectable par un des équipements d'extrémités.

De cette façon, dans le cas où l'activation de chaque autre mode est effectuée par l'équipement intermédiaire, on utilise astucieusement une inversion de la valeur d'au moins un bit pour réaliser cette activation (l'équipement intermédiaire inverse par exemple la valeur du spin bit, ce qui est une action non prévue dans la spécification actuelle du protocole de transport QUIC).

Ainsi, il est possible d'obtenir une grande diversité dans l'ordre de classement, et donc d'exécution, des modes de surveillance. Cette liste n'est pas exhaustive.

Selon une caractéristique particulière, ladite connexion est une connexion multi-chemins et en ce que ledit chemin résulte d'un ajout de chemin dans ladite connexion multi-chemins, ledit ajout de chemin ayant été déclenché par une activation d'un autre mode qui est unique ou fait partie d'un autre ensemble de modes convenu entre les équipements d'extrémités et un autre équipement intermédiaire présent sur un autre chemin entre les équipements d'extrémités.

Ainsi, la notion d'ensemble de modes de surveillance, telle que définie plus haut dans la présente solution, s'applique à un chemin ajouté dans une connexion multi-chemins. Le mode de surveillance ayant déclenché cet ajout de chemin est soit un mode unique (c'est-à-dire ne faisant pas partie d'un autre ensemble de modes de surveillance), soit un mode faisant partie d'un autre ensemble de modes de surveillance.

Dans un autre mode de réalisation de l'invention, il est proposé un produit programme d'ordinateur qui comprend des instructions de code de programme pour la mise en oeuvre du procédé précité (dans l'un quelconque de ses différents modes de réalisation), lorsque ledit programme est exécuté par un processeur.

Dans un autre mode de réalisation de l'invention, il est proposé un médium de stockage lisible par ordinateur et non transitoire, stockant un programme d'ordinateur comprenant un jeu d'instructions exécutables par un processeur pour mettre en oeuvre le procédé précité (dans l'un quelconque de ses différents modes de réalisation).

Dans un autre mode de réalisation de l'invention, il est proposé un système de surveillance d'une connexion entre des équipements d'extrémités via un réseau de communication selon la revendication 17.

Selon une caractéristique particulière, ledit équipement intermédiaire ou un des équipements d'extrémités comprend une machine de calcul reprogrammable et/ou une machine de calcul dédiée, configurée pour implémenter lesdits moyens d'activation dudit ensemble de modes et lesdits moyens d'activation de chaque autre mode dudit ensemble de modes.

### 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1, déjà décrite en relation avec l'art antérieur, illustre de manière générique l'en-tête d'un paquet QUIC ;
- la figure 2A est une représentation schématique de mesures RTT complètes (en amont et en aval) par un équipement de réseau sur le chemin entre le client et le serveur ;
- la figure 2B est une représentation schématique de mesures demi-RTT (en amont et en aval) par un équipement de réseau sur le chemin entre le client et le serveur ;
- la figure 3 présente un diagramme d'évènements illustrant un exemple d'élaboration et de partage d'un ensemble de modes et d'un ordre de classement associé, lors de l'établissement d'une connexion QUIC ;
- la figure 4 présente un diagramme d'évènements illustrant un exemple d'utilisation d'un ensemble de modes et d'un ordre de classement associé, lors de l'utilisation d'une connexion QUIC ;
- la figure 5 présente un organigramme d'un mode de réalisation particulier du procédé selon l'invention ; et
- la figure 6 présente la structure d'un dispositif correspondant à chacun des deux équipements d'extrémités et à l'équipement intermédiaire, selon un mode de réalisation particulier de l'invention.

### 5. DESCRIPTION DÉTAILLÉE

Sur toutes les figures du présent document, les éléments et étapes identiques sont désignés par une même référence numérique.

### Principe général

La **figure 5** présente un organigramme d'un mode de réalisation particulier du procédé selon l'invention de surveillance d'une connexion entre des équipements d'extrémités via un réseau de communication.

Dans la suite de la description, on considère à titre d'exemple le cas « unicast » (connexion entre un premier équipement d'extrémité et un deuxième équipement d'extrémité). L'invention n'est pas limitée à cette implémentation et s'applique également à d'autres configurations, notamment « multicast » (connexion à une pluralité d'équipements d'extrémité).

On distingue trois étapes successives, référencées 51 à 53.

Dans l'étape 51 (découverte), un ensemble de modes (comprenant au moins deux modes de surveillance) et un ordre de classement associé sont convenus entre les deux équipements d'extrémités et un équipement intermédiaire présent sur un chemin entre les deux équipements d'extrémités.

Dans l'étape 52 (activation de l'ensemble de modes), l'ensemble de modes précité est activé. Ceci correspond à une activation du premier mode selon l'ordre de classement.

Dans l'étape 53 (passage d'un mode à un autre), chaque autre mode de l'ensemble de modes est activé selon l'ordre de classement. Ainsi, s'il y a plusieurs autres modes (après le premier), ils sont activés chacun leur tour.

Ces étapes et les éléments qui y sont utilisés sont maintenant détaillés.

Dans une implémentation particulière, chaque mode de surveillance comprend au moins un mécanisme mis en oeuvre par au moins un des deux équipements d'extrémité et permettant à l'équipement intermédiaire et/ou à au moins un autre équipement intermédiaire d'effectuer au moins une fonction de surveillance de la connexion.

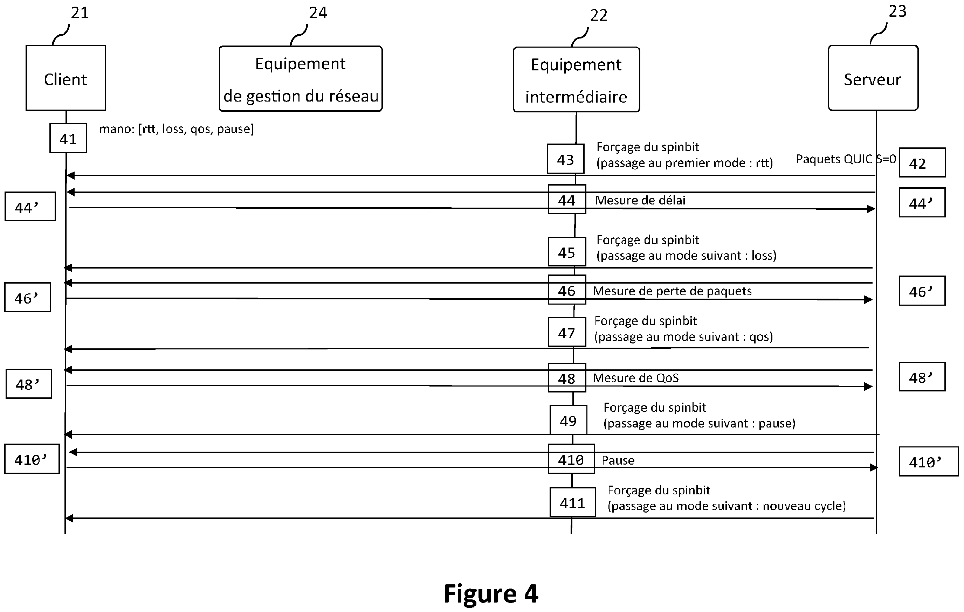

Dans une implémentation particulière, l'ensemble de modes comprend un mode pause (contrairement à un mode de surveillance, pas de mécanisme mis en oeuvre par les équipements d'extrémité pour permettre à l'équipement intermédiaire d'effectuer au moins une fonction de surveillance). Comme discuté plus bas en relation avec la figure 4, le mode pause est par exemple le dernier mode (selon l'ordre de classement) de l'ensemble de modes (exemple : « {mano: [rtt, loss, qos, pause]} ») et il permet, dans le cas d'un ordre de classement cyclique avec retour au premier, d'attendre avant le déclenchement d'un nouveau cycle.

Ainsi, à travers les différents modes de surveillance de l'ensemble, différentes fonctions de surveillance peuvent être effectuées, notamment :
- une mesure d'au moins un délai, sur un flux bidirectionnel (voir par exemple ci-dessous la présentation des mécanismes ayant pour identifiants « rtt » et « rttvec ») ou unidirectionnel (voir par exemple ci-dessous la présentation du mécanisme ayant pour identifiant « uni ») ;
- une mesure de perte de paquets (voir par exemple ci-dessous la présentation des mécanismes ayant pour identifiants « mark », « loss » et « multipath_1 ») ;
- une mesure de qualité de service (mesure propre à une partie d'un service ; par exemple : audio, vidéo) (voir par exemple ci-dessous la présentation du mécanisme ayant pour identifiant « qos ») ;
- une mesure de qualité d'expérience (mesure propre à une perception d'une application par un client) (voir par exemple ci-dessous la présentation du mécanisme ayant pour identifiant « qoe ») ;
- un envoi d'au moins une indication aux équipements d'extrémités (voir par exemple ci-dessous la présentation du mécanisme ayant pour identifiant « ECN_L4 ») ;
- etc.

Dans un seul souci de simplification, on suppose dans la suite de la description que chaque mode de surveillance comprend un unique mécanisme mis en oeuvre par au moins un des deux équipements d'extrémité et permettant à l'équipement intermédiaire et/ou à au moins un autre équipement intermédiaire d'effectuer une unique fonction de surveillance. La présente invention n'est bien sûr pas limitée à cette mise en oeuvre particulière et concerne également le cas où au moins un des modes de surveillance comprend au moins deux mécanismes mis en oeuvre simultanément, chacun permettant à l'équipement intermédiaire et/ou à l'autre équipement intermédiaire d'effectuer au moins une fonction de surveillance distincte. Par exemple, un même mode peut comprendre les mécanismes (décrits plus bas) ayant pour identifiants « rtt » et « multipath_1 », pour effectuer simultanément une mesure de RTT et une mesure de perte de paquets.

### Découverte

Dans une implémentation particulière, avant d'être convenus entre les deux équipements d'extrémités et l'équipement intermédiaire, l'ensemble de modes et l'ordre de classement associé sont proposés par un équipement de gestion du réseau (lors d'un attachement d'un des deux équipements d'extrémité au réseau de communication), ou un des deux équipements d'extrémité jouant un rôle de client, ou encore un des deux équipements d'extrémité jouant un rôle de serveur. Après avoir été proposés, l'ensemble de modes et/ou l'ordre de classement associé est (sont) éventuellement modifié(s) par l'équipement de gestion du réseau et/ou au moins un des deux équipements d'extrémités et/ou l'équipement intermédiaire.

Dans le cas d'une proposition par un équipement de gestion du réseau, l'ensemble de modes et/ou l'ordre de classement associé sont par exemple proposés par une fonction AAA (pour « Authentication, Authorization, Accounting/Auditing » en anglais, ou « authentification, autorisation, et traçabilité » en français) exécutée ou relayée par l'équipement de gestion du réseau lors d'un contrôle d'accès du client. En d'autres termes, le client ou le serveur peut renseigner les modes supportés à partir d'information reçues de l'équipement de gestion du réseau.

Dans le cas d'une proposition par le client, l'ensemble de modes et/ou l'ordre de classement associé sont par exemple négociés lors de l'établissement de la connexion QUIC (ou TLS, ou TCPCrypt) dans une nouvelle extension TLS (définie plus bas et appelée CARROUSEL) présente dans la prise de contact (handshake) établissant la sécurité du transport (handshake TLS ClientHello, QUIC CHO...) lors de la création de la connexion, voire de la reprise de la session. La nouvelle extension est renseignée par le client ou le serveur, voire par sélection d'un mode dans un ensemble de modes supportés par l'un ou l'autre. Dans ce cas, un équipement de gestion du réseau prend connaissance de l'ensemble de modes et peut retirer le ou les modes qui ne lui conviennent pas. Il peut également ajouter des modes ou les proposer dans un ordre différent, voire enlever certains modes. Le client détectera que l'ensemble de modes a été modifié et peut décider d'accepter ou non les modifications apportées.

Dans le cas d'une proposition par le serveur, l'ensemble de modes et/ou l'ordre de classement associé sont par exemple proposés dans un champ ALT-SVC d'un entête HTTP1 ou HTTP2. Ceci permet d'inciter le client à effectuer une reconnexion vers un autre serveur (ou le même) supportant le(s) modes recherchés. Il y a alors ajout d'une connexion dans le sens client vers serveur, supportant l'ensemble de modes choisi (même quintuplé sauf port client) et offrant par exemple plus de possibilités pour un dépannage applicatif (voir par exemple « quico_dmz » ou « quico_taps »).

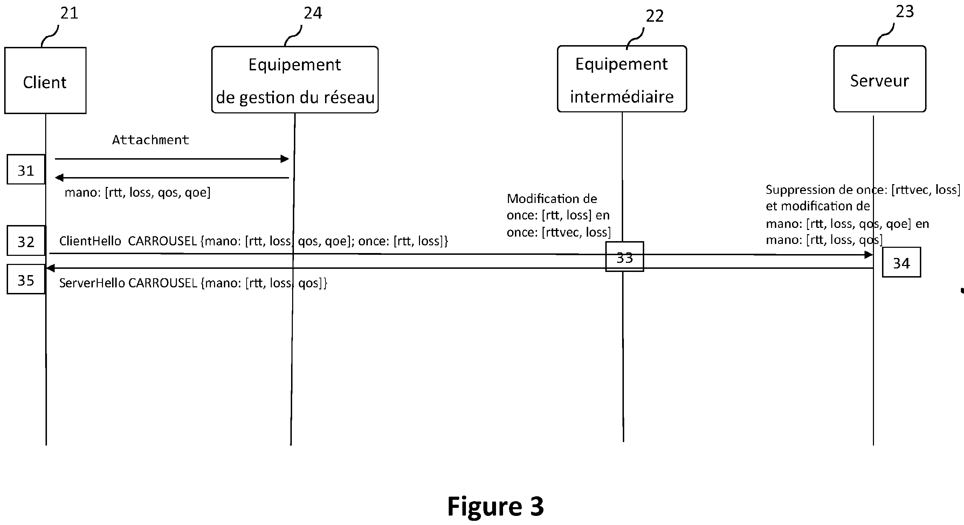

Dans une autre implémentation particulière, l'ensemble de modes de surveillance et l'ordre de classement associé sont convenus entre les deux équipements d'extrémités et l'équipement intermédiaire lors de la connexion entre deux équipements d'extrémités (voir plus bas la description de la figure 3, par exemple), puis enregistrés dans un ticket de session. Par la suite, l'ensemble de modes et l'ordre de classement associé convenus sont réutilisés lors d'une reprise de session (ou lors d'une nouvelle session). On utilise par exemple, lors de la reprise d'une session QUIC (∼ 0-RTT), un ticket de session TLS contenant en plus une indication des modes supportés par la connexion QUIC à sa création.

### Activation de l'ensemble de modes et passage d'un mode à un autre (contrôle du cycle de vie)

Dans un premier mode de réalisation, l'activation initiale de l'ensemble de modes puis l'activation de chaque changement de mode (c'est-à-dire de chaque passage d'un mode à un autre selon l'ordre de classement) sont effectuées par l'équipement intermédiaire, quand il le juge nécessaire.

Dans une implémentation particulière, chaque activation est réalisée par l'équipement intermédiaire en effectuant une modification de la valeur d'au moins un bit dans un entête de paquet, cette modification étant détectable par un des équipements d'extrémité.

Dans une implémentation particulière, la modification précitée est une inversion forcée d'une valeur du spin bit défini dans la spécification du protocole de transport QUIC. Plus généralement, l'équipement intermédiaire effectue une inversion de la valeur d'au moins un bit dans un entête de paquet, l'intégrité de cette valeur étant protégée par les équipements d'extrémités de sorte que l'inversion peut être détectée par un des équipements d'extrémités.

Par exemple, l'inversion d'un 0 est une demande d'activation initiale, et l'inversion d'un 1 est une demande de passage au mode suivant. Le principe est le suivant : chaque inversion forcée d'une valeur du spin bit par l'équipement intermédiaire agit sur une protection (par exemple un code d'authentification de message de type HMAC) dont bénéficie le message dont l'entête contient ce spin bit. Le code d'authentification sur le message reçu par l'équipement d'extrémité est donc faux, mais ce code d'authentification devient vrai (et la protection est conservée) si l'équipement d'extrémité inverse la valeur du spin bit et refait le calcul. Ainsi, l'équipement d'extrémité détecte qu'il y a eu une inversion forcée d'une valeur du spin bit, et en déduit que cela signifie une activation (soit activation initiale, soit activation du passage d'un mode à un autre, selon que l'inversion porte sur un 0 ou un 1) par l'équipement intermédiaire.

Dans un deuxième mode de réalisation, l'activation initiale de l'ensemble de modes puis l'activation de chaque changement de mode sont effectuées par un des deux équipements d'extrémités, si au moins une condition d'activation est vérifiée. Exemples de condition d'activation :
- une quantité de données non reçues par un des deux équipements d'extrémité jouant un rôle de récepteur est supérieure à un premier seuil prédéterminé ;
- une quantité de données retransmises par un des deux équipements d'extrémité jouant un rôle d'émetteur est supérieure à un deuxième seuil prédéterminé ;
- une information de pré-congestion est détectée par un des deux équipements d'extrémité (par exemple sur réception du bit ECN indiquant une pré-congestion sur le chemin ou sur réception du bit RE-ECN indiquant une série de précongestions sur le chemin) ;
- quand un message RTCP XR indique une durée maximale d'un épisode de perte (« max loss épisode length ») conséquente (quand le protocole QUIC est multiplexé avec d'autres protocoles de transport (voir « rfc7983 » et https://tools.ietf.org/html/draft-aboba-avtcore-quic-multiplexing-01 on UDP port 443) ;
- une quantité de données de contrôle détectées comme corrompues par un des deux équipements d'extrémité est supérieure à un troisième seuil ;
- etc.

### Mécanismes

On présente maintenant quelques exemples de mécanismes mis en oeuvre par au moins un des deux équipements d'extrémité et permettant à l'équipement intermédiaire et/ou à au moins un autre équipement intermédiaire d'effectuer une fonction de surveillance :
- mécanisme ayant pour identifiant « rtt » : mécanisme de répétition et d'inversion d'un bit particulier dans un entête de paquet, dans lequel un premier équipement d'extrémité met à un, respectivement zéro, le bit particulier, puis un second équipement d'extrémité répète le bit particulier à un, respectivement zéro, puis le premier équipement d'extrémité inverse la valeur du bit particulier (et ainsi de suite). C'est par exemple le mécanisme « spin bit » défini dans la spécification du protocole de transport QUIC (comportement actuel du spin bit tel que défini par exemple dans https://tools.ietf.org/wg/quic/draft-ietf-quic-spin-exp/) ;
- mécanisme ayant pour identifiant « rttvec » : combinaison d'un mécanisme donné de la présente liste et d'un mécanisme d'insertion supplémentaire d'une indication contextuelle d'applicabilité de ce mécanisme donné. Il s'agit par exemple d'une combinaison des mécanismes « spin bit » et « VEC » définis dans la spécification du protocole de transport QUIC (voir par exemple https ://tools .ietf.org/html/draft-trammell-quic-spin-03#section-4 ;
- mécanisme ayant pour identifiant « mark » : mécanisme de répétition et d'inversion d'un bit particulier dans un entête de paquet, dans lequel un équipement d'extrémité met à un de manière répétitive, respectivement à zéro, le bit particulier. C'est par exemple le mécanisme de marquage alternatif appelé « Alternate Marking (Coloring) technique » (voir par exemple https://tools.ietf.org/html/draft-ietf-ippm-alt-mark-05) ;
- mécanisme ayant pour identifiant « loss » : mécanisme de désactivation du chiffrement de la numérotation de paquet (champ « Packet Number ») dans l'entête de paquets QUIC sur le chemin ;
- mécanisme ayant pour identifiant « multipath_1 » : dans le cas d'une connexion multi-chemins, création d'un autre chemin entre les équipements d'extrémité, sur lequel il n'y a pas de chiffrement de la numérotation de paquet (champ « Packet Number ») (par exemple dans l'entête de paquets QUIC) ;
- mécanisme ayant pour identifiant « multipath_2 » : dans le cas d'une connexion multi-chemins, création d'un autre chemin entre les équipements d'extrémité, sur lequel les équipements d'extrémité et un autre équipement intermédiaire (présent sur cet autre chemin) utilisent un autre ensemble de modes associé à un autre ordre de classement ;
- mécanisme ayant pour identifiant « ECN_L4 » : mécanisme utilisant au moins un bit dans un entête de paquet (par exemple dans l'entête de paquets QUIC) pour envoyer au moins une indication de contexte réseau. Par exemple, une fois le mode ECN_L4 activé, le spin bit S est utilisé par la couche transport (l'indication n'est donc pas positionnée au niveau de la couche IP comme dans ECN et L4S) pour indiquer des contextes réseau pénalisants ou encourageants de congestions, gigue, perte, S/N, débit... L'indication est par exemple portée par les 2 bits VEC (en utilisant la même méthode d'activation) ou éventuellement via un autre tramage ;
- mécanisme ayant pour identifiant «qos » : mécanisme de surveillance au niveau de la couche de transport (mécanisme de qualité de service, QoS). C'est par exemple l'envoi par le client d'une demande d'ajout d'un chemin TCP dans une connexion multi-chemins QUIC, avec un message PATH_CHALLENGE dans une connexion TCP ENO afin que le réseau puisse observer la couche transport d'une partie de la connexion multi-chemins QUIC. Autre possibilité : ajout d'un chemin d'un autre protocole (e.g. RTP) sur un même port suivant rfc7983 et https ://tools .ietf.org/html/draft -aboba-avtcore-quic-multiplexing -01 ;
- mécanisme ayant pour identifiant « qoe » : mécanisme de surveillance au niveau de la couche application (mécanisme de qualité d'expérience, QoE). C'est par exemple l'envoi par le client d'une demande d'ajout d'un chemin dans une connexion multi-chemins QUIC (par exemple avec un message MIGRATION_CHALLENGE). Autre possibilité : ce mécanisme peut simplement consister à communiquer les clés de session à une fonction réseau ;
- mécanisme ayant pour identifiant « uni » : mécanisme de répétition et d'inversion d'un bit particulier dans un entête de paquet, dans lequel un premier équipement d'extrémité met à un, respectivement zéro, le bit particulier, puis un second équipement d'extrémité répète le bit particulier à un, respectivement zéro, puis le premier équipement d'extrémité répète le bit particulier à un, respectivement zéro, avant de respecter un silence pendant au moins un délai d'aller/retour. Il permet par exemple d'effectuer une mesure sur flux unidirectionnel (quand l'équipement est présent seulement sur un sens de transmission, comme souvent dans les routeurs en limite d'un système autonome (ou AS, pour « Autonomous System » en anglais). C'est par exemple une variante du mécanisme « spin bit » défini dans la spécification du protocole de transport QUIC. Dans cette variante, on distingue quatre phases : spin bit mis à 1 par le client ; puis rebond du spin bit à 1 par le serveur ; puis à nouveau rebond du spin bit à 1 par le client ; puis silence pendant au moins un RTT.

Dans un cas particulier mentionné plus haut, chaque mode de surveillance comprend un unique mécanisme. Le mode et son unique mécanisme sont dans ce cas confondus, et on utilise le même identifiant pour parler des deux (par exemple, mode « rtt » et mécanisme « rtt »).

### Action supplémentaire

Dans une variante d'implémentation, au moins un des modes de surveillance comprend au moins une fonction complémentaire mise en oeuvre par au moins un des deux équipements d'extrémité. Exemples de fonctions complémentaires :
- passage dans un mode (« mode dégradé ») où un des deux équipements d'extrémité jouant un rôle de récepteur ne demande pas une retransmission des données non reçues ;
- passage dans un mode (« mode flush protocolaire ») où un des deux équipements d'extrémité jouant un rôle d'émetteur ne transmet pas des données en attente dans un buffer d'émission et passe aux données suivantes ;
- passage dans un mode (« mode flush applicatif ») où un des deux équipements d'extrémité jouant un rôle d'émetteur ne transmet pas des données applicatives en attente et passe à des données applicatives suivantes (par exemple l'application de streaming passe au Group of Picture (GoP) suivant, un genre d'avance rapide pour raison technique) ;
- passage dans un mode (« mode flush réseau ») où un des deux équipements d'extrémité jouant un rôle d'émetteur ne transmet pas de données pendant un délai d'aller/retour (un genre de pause de n ms) ;
- envoi, par un des deux équipements d'extrémité jouant un rôle d'émetteur, d'une indication d'une augmentation de ressources réseau attribuées ;
- etc.

### Ordre de classement

Différents types d'ordres de classement peuvent être utilisés, comme par exemple :
- ordre de type « shuffle » : ordre aléatoire (par exemple un ensemble de modes s'écrivant « shuffle: [rtt, loss] » est un ensemble dont les modes sont « rtt » et « loss », et ces derniers sont activés dans un ordre aléatoire) ;
- ordre de type « mano » : ordre prédéterminé et cyclique, avec passage explicite d'un mode au suivant avec reprise au premier (par exemple un ensemble de modes s'écrivant « mano: [rtt, loss, qos, pause] » est un ensemble dont les modes sont « rtt », « loss », « qos » et « pause », et ces derniers sont activés de manière cyclique, dans l'ordre prédéterminé « rtt »/« loss »/« qos »/ »pause » à chaque cycle) ;
- ordre de type « auto » : comme le type « mano » mais avec passage implicite (périodique, ou autre) d'un mode au suivant ;
- ordre de type « once » : comme le type « mano » mais non-cyclique (c'est-à-dire avec un seul cycle) (par exemple un ensemble de modes s'écrivant « once: [rttvec, loss] » est un ensemble dont les modes sont « rttvec » et « loss », et ces derniers sont activés une seule fois, dans l'ordre prédéterminé « rtt »/« loss ») ;
- etc.

### Exemples d'implémentation

Dans une implémentation particulière, adaptée au cas décrit ci-dessus d'une proposition par le client, on utilise une nouvelle extension TLS, appelée CARROUSEL, qui est similaire à l'extension TLS ALPN (spécifiée dans RFC7301, voir https://tools.ietf.org/html/rfc7301). Elle supporte un filtrage (c'est-à-dire une modification) par les équipements intermédiaires (middleboxes) du réseau : le serveur reçoit les modes supportés par le client mais en plus filtrés (c'est-à-dire modifiés) par un équipement de gestion de réseau lors de l'attachement au réseau (voir ci-dessous la description de l'étape 33 de la figure 3).

Le début du processus de négociation (« handshake ») entre le client et le serveur s'appuie sur un échange de messages « ClientHello » et « ServerHello » et peut s'écrire :

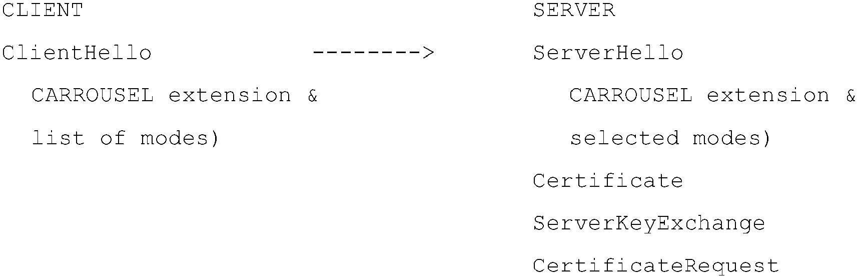

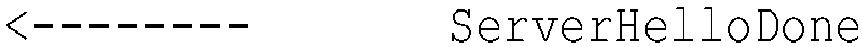

Dans une implémentation particulière, l'ensemble de modes retenu est enregistré dans un ticket de session QUIC (équivalent du session ticket TLS, voir RFC5077) que le serveur envoie au client lors de la création de la connexion et qui sera réutilisé pour la reprise des sessions (par la suite, la connexion créée lors de la reprise de session utilisera l'ensemble de modes convenu à la création de la connexion). Dans ce cas, l'échange de messages peut s'écrire :

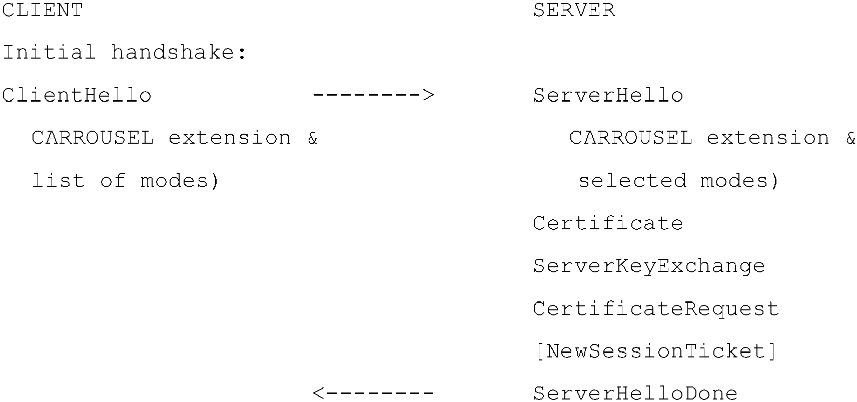

La **figure 3** présente un diagramme d'évènements illustrant un exemple d'élaboration et de partage (découverte) d'un ensemble de modes et d'un ordre de classement associé, lors de l'établissement d'une connexion QUIC.

L'équipement d'extrémité jouant le rôle de client (appelé ci-après client) est référencé 21. L'équipement d'extrémité jouant le rôle de serveur (appelé ci-après serveur) est référencé 23. L'équipement intermédiaire est référencé 22. Un équipement de gestion du réseau est référencé 24.

Dans une étape 31, le client réalise un attachement auprès de l'équipement de gestion du réseau. En retour, il reçoit de ce dernier une proposition pour l'ensemble de modes et l'ordre de classement associé. Dans l'exemple illustré, il s'agit de « mano: [rtt, loss, qos, qoe] ». Au vu des définitions données plus haut, cet ensemble de modes comprend donc les quatre modes « rtt », « loss », « qos » et « qoe », et l'ordre de classement est de type « mano ».

Dans une étape 32, correspondant au début du processus de négociation (« handshake ») QUIC entre le client et le serveur, le client transmet, dans un message ClientHello CARROUSEL, une proposition modifiée pour l'ensemble de modes et l'ordre de classement associé, à savoir « {mano: [rtt, loss, qos, qoe] ; once: [rtt, loss]} ». En d'autres termes, le client a ajouté un autre ensemble de modes qu'il connaît (« once: [rtt, loss] »).

Dans une étape 33, l'équipement intermédiaire modifie la proposition transmise par le client. Plus précisément, il remplace le premier mode (« rtt ») du premier ensemble de modes par le mode « rttvec » (pour obtenir un RTT plus précis).

Dans une étape 34, le serveur modifie également la proposition transmise par le client (et préalablement modifiée par l'équipement intermédiaire). Plus précisément, il supprime le deuxième ensemble de modes (« once: [rttvec, loss] ») et modifie le premier ensemble de modes (suppression du mode « qoe », pour protéger la vie privée).

Dans une étape 35, le serveur transmet, dans un message ServerHello CARROUSEL, la proposition modifiée à l'étape 34, pour l'ensemble de modes et l'ordre de classement associé, à savoir « {mano: [rtt, loss, qos]} ». Ensuite, l'établissement de la connexion QUIC est finalisé normalement.

La **figure 4** présente un diagramme d'évènements illustrant un exemple d'utilisation d'un ensemble de modes et d'un ordre de classement associé, lors de l'utilisation d'une connexion QUIC.

Le client, le serveur, l'équipement intermédiaire et l'équipement de gestion du réseau sont référencés 21, 23, 22 et 24 respectivement, comme sur la figure 3.

Dans une étape 41 (correspondant à l'ensemble des étapes de la figure 3), on suppose qu'une connexion est établie entre le client et le serveur et que l'ensemble de modes et l'ordre de classement associé qui sont retenus sont : « {mano: [rtt, loss, qos, pause]} ».

Dans une étape 42, le serveur transmet des paquets QUIC avec le spin bit à 0 (S=0).

Dans une étape 43, l'équipement intermédiaire effectue une inversion forcée de la valeur du spin bit, de façon à activer l'ensemble de modes. Comme discuté plus haut, l'activation de l'ensemble de modes correspond à une activation du premier mode selon l'ordre de classement. Dans l'exemple illustré, le mode « rtt » est le premier mode de l'ensemble de modes « {mano: [rtt, loss, qos, pause]} » selon l'ordre de classement. C'est donc ce mode « rtt » qui est activé.

Dans une étape 44, l'équipement intermédiaire effectue une mesure de RTT (fonction associée au mode « rtt »). Ceci est possible du fait que dans une étape 44', le client et le serveur mettent en oeuvre le mécanisme adéquat (voir description détaillée plus haut du mode « rtt »).

Dans une étape 45, l'équipement intermédiaire effectue une inversion forcée de la valeur du spin bit, de façon à activer le mode suivant, selon l'ordre de classement. Dans l'exemple illustré, c'est donc le mode « loss » qui est activé.

Dans une étape 46, l'équipement intermédiaire effectue une mesure de perte de paquets (fonction associée au mode « loss »). Ceci est possible du fait que dans une étape 46', le client et le serveur mettent en oeuvre le mécanisme adéquat (voir description détaillée plus haut du mode « loss »).

Dans une étape 47, l'équipement intermédiaire effectue une inversion forcée de la valeur du spin bit, de façon à activer le mode suivant, selon l'ordre de classement. Dans l'exemple illustré, c'est donc le mode « qos » qui est activé.

Dans une étape 48, l'équipement intermédiaire effectue une mesure de QoS (fonction associée au mode « qos »). Ceci est possible du fait que dans une étape 48', le client et le serveur mettent en oeuvre le mécanisme adéquat (voir description détaillée plus haut du mode « qos »).

Dans une étape 49, l'équipement intermédiaire effectue une inversion forcée de la valeur du spin bit, de façon à activer le mode suivant, selon l'ordre de classement. Dans l'exemple illustré, c'est donc le mode « pause » qui est activé.

Dans une étape 410, l'équipement intermédiaire est en pause. Dans une étape 410', le client et le serveur sont également en pause.

Dans une étape 411, l'équipement intermédiaire effectue une inversion forcée de la valeur du spin bit, de façon à activer le mode suivant, selon l'ordre de classement. Dans l'exemple illustré, c'est donc le mode « rtt » qui est activé (démarrage d'un nouveau cycle, c'est-à-dire reprise au premier mode de l'ensemble de modes).

La **figure 6** présente la structure d'un dispositif 60 correspondant à chacun des deux équipements d'extrémités 21, 23 et à l'équipement intermédiaire 22, selon un mode de réalisation particulier de l'invention permettant de mettre en oeuvre le procédé de surveillance décrit plus haut, en relation avec les figures 3, 4 et 5.

Le dispositif 60 comprend une mémoire vive 62 (par exemple une mémoire RAM), une unité de traitement 61, équipée par exemple d'un processeur et pilotée par un programme d'ordinateur stocké dans une mémoire morte 63 (par exemple une mémoire ROM ou un disque dur). A l'initialisation, les instructions de code du programme d'ordinateur sont par exemple chargées dans la mémoire vive 62 avant d'être exécutées par le processeur de l'unité de traitement 61.

Cette figure 6 illustre seulement une manière particulière, parmi plusieurs possibles, de réaliser la solution proposée. En effet, la technique de l'invention se réalise indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel). Dans le cas où l'invention est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

De nombreux autres modes de réalisation de l'invention peuvent être envisagés. En effet, le mode de réalisation particulier décrit ci-dessus en relation avec les figures 3 à 6 (basé sur l'utilisation du spin bit pour utiliser plusieurs mécanismes de surveillance, y compris le mécanisme « spin bit » du protocole QUIC) peut être généralisé à d'autres contextes dans lesquels un protocole (par exemple d'une des couches 2 (liaison), 3 (réseau), 4 (transport) ou 7 (application) du modèle OSI) prévoit le chiffrement des données de contrôle à l'exception d'un ou quelques bit(s) lisibles par les équipements intermédiaires pour effectuer au moins une fonction de surveillance.

## Revendications

1. Procédé de surveillance d'une connexion entre des équipements d'extrémités (21, 23) via un réseau de communication, **caractérisé en ce qu'**un ensemble de modes, comprenant au moins deux modes de surveillance, et un ordre de classement associé audit ensemble de modes, sont convenus (51) entre les équipements d'extrémités et un équipement intermédiaire (22) présent sur un chemin entre les équipements d'extrémités, ledit ordre de classement étant de type aléatoire ou prédéterminé,
**en ce que** le procédé comprend :
- une activation initiale (52) dudit ensemble de modes, correspondant à une activation du premier mode selon ledit ordre de classement ; puis
- une activation (53), selon ledit ordre de classement, de chaque autre mode dudit ensemble de modes correspondant à un passage d'un mode à l'autre dudit ensemble selon ledit ordre de classement ;
et **en ce que** chaque mode de surveillance comprend au moins un mécanisme mis en oeuvre par au moins un des équipements d'extrémité et permettant audit équipement intermédiaire d'effectuer au moins une fonction de surveillance de ladite connexion.

2. Procédé selon la revendication 1, **caractérisé en ce qu'**au moins un desdits modes de surveillance comprend au moins deux mécanismes mis en oeuvre simultanément par au moins un des équipements d'extrémité, chacun permettant audit équipement intermédiaire d'effectuer au moins une fonction de surveillance distincte.

3. Procédé selon la revendication 1 ou 2, **caractérisé en ce que** ladite au moins une fonction de surveillance appartient au groupe comprenant :
- une mesure d'au moins un délai ;
- une mesure de perte de paquets ;
- une mesure de qualité de service ;
- une mesure de qualité d'expérience ; et
- un envoi d'au moins une indication aux équipements d'extrémités.

4. Procédé selon l'une quelconque des revendications 1 à 3, **caractérisé en ce que** ledit au moins un mécanisme appartient au groupe comprenant :
- un mécanisme de répétition et d'inversion d'un bit particulier dans un entête de paquet, dans lequel un premier équipement d'extrémité met à un, respectivement zéro, le bit particulier, puis un second équipement d'extrémité répète le bit particulier à un, respectivement zéro, puis le premier équipement d'extrémité inverse la valeur du bit particulier ;
- une combinaison d'un mécanisme donné appartenant au groupe et d'un mécanisme d'insertion supplémentaire d'une indication contextuelle d'applicabilité dudit mécanisme donné ;
- un mécanisme de répétition et d'inversion d'un bit particulier dans un entête de paquet, dans lequel un équipement d'extrémité met à un de manière répétitive, respectivement à zéro, le bit particulier ;
- un mécanisme de désactivation du chiffrement de la numérotation de paquet ;
- dans le cas où ladite connexion est une connexion multi-chemins, un mécanisme d'ajout dans ladite connexion d'un autre chemin entre les équipements d'extrémités qui ne chiffre pas la numérotation de paquet ;
- dans le cas où ladite connexion est une connexion multi-chemins, un mécanisme d'ajout dans ladite connexion d'un autre chemin entre les équipements d'extrémités, un autre ensemble de modes et un autre ordre de classement associé étant convenus, pour ledit autre chemin, entre les équipements d'extrémités et un autre équipement intermédiaire présent sur ledit autre chemin ;
- un mécanisme utilisant au moins un bit dans un entête de paquet pour envoyer au moins une indication de contexte réseau ;
- un mécanisme de surveillance au niveau de la couche de transport ;
- un mécanisme de surveillance au niveau de la couche application ;
- un mécanisme de répétition et d'inversion d'un bit particulier dans un entête de paquet, dans lequel un premier équipement d'extrémité met à un, respectivement zéro, le bit particulier, puis un second équipement d'extrémité répète le bit particulier à un, respectivement zéro, puis le premier équipement d'extrémité répète le bit particulier à un, respectivement zéro, avant de respecter un silence pendant au moins un délai d'aller/retour.

5. Procédé selon l'une quelconque des revendications 1 à 4, **caractérisé en ce qu'**au moins un desdits modes de surveillance comprend au moins une fonction complémentaire mise en oeuvre par au moins un des équipements d'extrémité.

6. Procédé selon la revendication 5, **caractérisé en ce que** ladite au moins une fonction complémentaire appartient au groupe comprenant :
- passage dans un mode où un des équipements d'extrémité jouant un rôle de récepteur ne demande pas une retransmission des données non reçues ;
- passage dans un mode où un des équipements d'extrémité jouant un rôle d'émetteur ne transmet pas des données en attente dans un buffer d'émission et passe aux données suivantes ;
- passage dans un mode où un des équipements d'extrémité jouant un rôle d'émetteur ne transmet pas des données applicatives en attente et passe à des données applicatives suivantes ;
- passage dans un mode où un des équipements d'extrémité jouant un rôle d'émetteur ne transmet pas de données pendant un délai d'aller/retour ; et
- envoi, par un des équipements d'extrémité jouant un rôle d'émetteur, d'une indication d'une augmentation de ressources réseau attribuées.

7. Procédé selon l'une quelconque des revendications 1 à 6, **caractérisé en ce que**, avant d'être convenus entre les équipements d'extrémités et l'équipement intermédiaire, ledit ensemble de modes et ledit ordre de classement associé sont proposés (31) par un équipement de gestion dudit réseau (24), lors de l'attachement des équipements d'extrémité audit réseau de communication.

8. Procédé selon la revendication 7, **caractérisé en ce que**, après avoir été proposés, ledit ensemble de modes et/ou ledit ordre de classement associé est (sont) modifié(s) (33, 34) par au moins un équipement parmi :
- l'équipement de gestion dudit réseau ;
- au moins un des équipements d'extrémités ; et
- l'équipement intermédiaire.

9. Procédé selon l'une quelconque des revendications 1 à 8, **caractérisé en ce que** ledit ensemble de modes et ledit ordre de classement associé sont convenus entre les équipements d'extrémités et l'équipement intermédiaire lors de la connexion entre les équipements d'extrémités, puis enregistrés dans un ticket de session, et **en ce que** ledit ensemble de modes et ledit ordre de classement associé convenus sont réutilisables lors d'une reprise de session ou lors d'une nouvelle session.

10. Procédé selon l'une quelconque des revendications 1 à 9, **caractérisé en ce que** l'activation dudit ensemble de modes est effectuée par :
- l'équipement intermédiaire ; ou
- un des équipements d'extrémités, si au moins une condition d'activation est vérifiée.

11. Procédé selon la revendication 10, **caractérisé en ce que** l'activation dudit ensemble de modes par l'équipement intermédiaire comprend une modification de la valeur d'au moins un bit dans un entête de paquet, ladite modification étant détectable par un des équipements d'extrémités.

12. Procédé selon la revendication 10, **caractérisé en ce que** ladite au moins une condition d'activation porte sur des données échangées et appartient au groupe comprenant :
- une quantité de données non reçues par un des équipements d'extrémité jouant un rôle de récepteur est supérieure à un premier seuil prédéterminé ;
- une quantité de données retransmises par un des équipements d'extrémité jouant un rôle d'émetteur est supérieure à un deuxième seuil prédéterminé ;
- une information de pré-congestion est détectée par un des équipements d'extrémité ; et
- une quantité de données de contrôle détectées comme corrompues par un des équipements d'extrémité est supérieure à un troisième seuil.

13. Procédé selon l'une quelconque des revendications 1 à 12, **caractérisé en ce que** l'activation de chaque autre mode dudit ensemble est effectuée par l'équipement intermédiaire ou un des équipements d'extrémités.

14. Procédé selon la revendication 13, **caractérisé en ce que** l'activation de chaque autre mode dudit ensemble par l'équipement intermédiaire comprend une modification de la valeur d'au moins un bit dans un entête de paquet, ladite modification étant détectable par un des équipements d'extrémités.

15. Procédé selon l'une quelconque des revendications 1 à 14, **caractérisé en ce que** ladite connexion est une connexion multi-chemins et **en ce que** ledit chemin résulte d'un ajout de chemin dans ladite connexion multi-chemins, ledit ajout de chemin ayant été déclenché par une activation d'un autre mode qui est unique ou fait partie d'un autre ensemble de modes convenu entre les équipements d'extrémités et un autre équipement intermédiaire présent sur un autre chemin entre les équipements d'extrémités.

16. Produit programme d'ordinateur (630), comprenant des instructions de code de programme pour la mise en oeuvre du procédé selon l'une quelconque des revendications 1 à 15, lorsque ledit programme est exécuté par un processeur (61).

17. Système de surveillance d'une connexion entre des équipements d'extrémités (21, 23) via un réseau de communication, dans lequel un ensemble de modes comprenant au moins deux modes de surveillance, et un ordre de classement associé audit ensemble de modes, de type aléatoire ou prédéterminé, sont convenus entre les équipements d'extrémités et un équipement intermédiaire (22) présent sur un chemin entre les équipements d'extrémités, chaque mode de surveillance comprenant au moins un mécanisme mis en oeuvre par au moins un des équipements d'extrémité et permettant audit équipement intermédiaire d'effectuer au moins une fonction de surveillance de ladite connexion, ledit système étant **caractérisé en ce qu'**il comprend :
- des moyens (61, 62, 63) d'activation initiale dudit ensemble de modes, correspondant à une activation du premier mode selon ledit ordre de classement ; et
- des moyens d'activation (61, 62, 63), selon ledit ordre de classement, de chaque autre mode dudit ensemble de modes correspondant à un passage d'un mode à l'autre dudit ensemble selon ledit ordre de classement ;
et **en ce que** chaque mode de surveillance comprend au moins un mécanisme mis en oeuvre par au moins un des équipements d'extrémité et permettant audit équipement intermédiaire d'effectuer au moins une fonction de surveillance de ladite connexion.

18. Système selon la revendication 17, **caractérisé en ce que** ledit équipement intermédiaire ou un des équipements d'extrémités comprend une machine de calcul reprogrammable (61, 62) et/ou une machine de calcul dédiée, configurée pour implémenter lesdits moyens d'activation dudit ensemble de modes et lesdits moyens d'activation de chaque autre mode dudit ensemble de modes.

## Patentansprüche

1. Verfahren zur Überwachung einer Verbindung zwischen Endgeräten (21, 23) über ein Kommunikationsnetz, **dadurch gekennzeichnet, dass** eine Menge von Modi, die mindestens zwei Überwachungsmodi umfasst, und eine der Menge von Modi zugeordnete Rangfolge zwischen den Endgeräten und einem Zwischengerät (22), das auf einem Weg zwischen den Endgeräten vorhanden ist, vereinbart werden (51), wobei die Rangfolge von einem zufälligen oder vorbestimmten Typ ist, dadurch, dass das Verfahren umfasst:
- eine anfängliche Aktivierung (52) der Menge von Modi, welche einer Aktivierung des ersten Modus gemäß der Rangfolge entspricht; danach
- eine Aktivierung (53), gemäß der Rangfolge, jedes weiteren Modus der Menge von Modi, welche einem Übergang von einem Modus der Menge zum anderen gemäß der Rangfolge entspricht;
und dadurch, dass jeder Überwachungsmodus mindestens einen Mechanismus umfasst, der von mindestens einem der Endgeräte angewendet wird und dem Zwischengerät ermöglicht, mindestens eine Funktion der Überwachung der Verbindung auszuführen.

2. Verfahren nach Anspruch 1, **dadurch gekennzeichnet, dass** mindestens einer der Überwachungsmodi mindestens zwei Mechanismen umfasst, die von mindestens einem der Endgeräte gleichzeitig angewendet werden, wobei jeder dem Zwischengerät ermöglicht, mindestens eine separate Überwachungsfunktion auszuführen.

3. Verfahren nach Anspruch 1 oder 2, **dadurch gekennzeichnet, dass** die mindestens eine Überwachungsfunktion zu der Gruppe gehört, welche umfasst:
- eine Messung mindestens einer Verzögerung;
- eine Paketverlustmessung;
- eine Dienstgütemessung;
- eine Erfahrungsqualitätsmessung; und
- ein Senden mindestens einer Anzeige an die Endgeräte.

4. Verfahren nach einem der Ansprüche 1 bis 3, **dadurch gekennzeichnet, dass** der mindestens eine Mechanismus zu der Gruppe gehört, welche umfasst:
- einen Mechanismus der Wiederholung und Inversion eines bestimmten Bits in einem Paket-Header, wobei ein erstes Endgerät das bestimmte Bit auf eins bzw. null setzt, danach ein zweites Endgerät das bestimmte Bit auf eins bzw. null wiederholt, danach das erste Endgerät den Wert des bestimmten Bits invertiert;
- eine Kombination eines gegebenen Mechanismus, welcher zu der Gruppe gehört, und eines Mechanismus der zusätzlichen Einfügung einer kontextuellen Angabe der Anwendbarkeit des gegebenen Mechanismus;
- einen Mechanismus der Wiederholung und Inversion eines bestimmten Bits in einem Paket-Header, wobei ein Endgerät das bestimmte Bit wiederholt auf eins bzw. null setzt;
- einen Mechanismus der Deaktivierung der Verschlüsselung der Paketnummerierung;
- in dem Falle, wenn die Verbindung eine Mehrwegverbindung ist, einen Mechanismus der Hinzufügung eines weiteren Weges zwischen den Endgeräten in die Verbindung, welcher die Paketnummerierung nicht verschlüsselt;
- in dem Falle, wenn die Verbindung eine Mehrwegverbindung ist, einen Mechanismus der Hinzufügung eines weiteren Weges zwischen den Endgeräten in die Verbindung, wobei eine weitere Menge von Modi und eine zugehörige weitere Rangfolge für diesen weiteren Weg zwischen den Endgeräten und einem weiteren Zwischengerät, das auf dem weiteren Weg vorhanden ist, vereinbart werden;
- einen Mechanismus, der mindestens ein Bit in einem Paket-Header verwendet, um mindestens eine Netzkontext-Angabe zu senden;
- einen Überwachungsmechanismus auf der Ebene der Transportschicht;
- einen Überwachungsmechanismus auf der Ebene der Anwendungsschicht;
- einen Mechanismus der Wiederholung und Inversion eines bestimmten Bits in einem Paket-Header, wobei ein erstes Endgerät das bestimmte Bit auf eins bzw. null setzt, danach ein zweites Endgerät das bestimmte Bit auf eins bzw. null wiederholt, danach das erste Endgerät das bestimmte Bit auf eins bzw. null wiederholt, bevor während mindestens einer Umlaufverzögerung eine Pause eingehalten wird.

5. Verfahren nach einem der Ansprüche 1 bis 4, **dadurch gekennzeichnet, dass** mindestens einer der Überwachungsmodi mindestens eine komplementäre Funktion umfasst, die von mindestens einem der Endgeräte ausgeführt wird.

6. Verfahren nach Anspruch 5, **dadurch gekennzeichnet, dass** die mindestens eine komplementäre Funktion zu der Gruppe gehört, welche umfasst:
- Übergang in einen Modus, in dem eines der Endgeräte, das die Rolle eines Empfängers spielt, keine Neuübertragung der nicht empfangenen Daten anfordert;
- Übergang in einen Modus, in dem eines der Endgeräte, das die Rolle eines Senders spielt, keine anstehenden Daten in einem Sendepuffer überträgt und zu den folgenden Daten übergeht;
- Übergang in einen Modus, in dem eines der Endgeräte, das die Rolle eines Senders spielt, keine anstehenden Anwendungsdaten überträgt und zu folgenden Anwendungsdaten übergeht;
- Übergang in einen Modus, in dem eines der Endgeräte, das die Rolle eines Senders spielt, während einer Umlaufverzögerung keine Daten überträgt; und
- Senden, durch eines der Endgeräte, das die Rolle eines Senders spielt, einer Anzeige einer Vergrößerung von zugewiesenen Netzressourcen.

7. Verfahren nach einem der Ansprüche 1 bis 6, **dadurch gekennzeichnet, dass** die Menge von Modi und die zugeordnete Rangfolge, bevor sie zwischen den Endgeräten und dem Zwischengerät vereinbart werden, von einem Verwaltungsgerät des Netzes (24) beim Verbinden der Endgeräte mit dem Kommunikationsnetz vorgeschlagen (31) werden.

8. Verfahren nach Anspruch 7, **dadurch gekennzeichnet, dass** die Menge von Modi und/oder die zugeordnete Rangfolge, nachdem sie vorgeschlagen wurden, durch mindestens ein Gerät von folgenden geändert (33, 34) wird (werden):
- das Verwaltungsgerät des Netzes;
- mindestens eines der Endgeräte; und
- das Zwischengerät.

9. Verfahren nach einem der Ansprüche 1 bis 8, **dadurch gekennzeichnet, dass** die Menge von Modi und die zugeordnete Rangfolge zwischen den Endgeräten und dem Zwischengerät bei der Verbindung zwischen den Endgeräten vereinbart werden und danach in einem Sitzungsticket registriert werden, und dadurch, dass die Menge von Modi und die zugeordnete Rangfolge, die vereinbart wurden, bei einer Sitzungswiederaufnahme oder bei einer neuen Sitzung wiederverwendbar sind.

10. Verfahren nach einem der Ansprüche 1 bis 9, **dadurch gekennzeichnet, dass** die Aktivierung der Menge von Modi durchgeführt wird von:
- dem Zwischengerät; oder
- einem der Endgeräte, falls mindestens eine Aktivierungsbedingung erfüllt ist.

11. Verfahren nach Anspruch 10, **dadurch gekennzeichnet, dass** die Aktivierung der Menge von Modi durch das Zwischengerät eine Änderung des Wertes mindestens eines Bits in einem Paket-Header umfasst, wobei die Änderung durch eines der Endgeräte erkennbar ist.

12. Verfahren nach Anspruch 10, **dadurch gekennzeichnet, dass** die mindestens eine Aktivierungsbedingung ausgetauschte Daten betrifft und zu der Gruppe gehört, welche umfasst:
- eine Menge von Daten, die von einem der Endgeräte, das die Rolle eines Empfängers spielt, nicht empfangen wurden, ist größer als ein vorbestimmter erster Schwellenwert;
- eine Menge von Daten, die von einem der Endgeräte, das die Rolle eines Senders spielt, erneut übertragen wurden, ist größer als ein vorbestimmter zweiter Schwellenwert;
- eine Vorüberlastungs-Information wird von einem der Endgeräte erkannt; und
- eine Menge von Steuerungsdaten, die von einem der Endgeräte als beschädigt erkannt wurden, ist größer als ein dritter Schwellenwert.

13. Verfahren nach einem der Ansprüche 1 bis 12, **dadurch gekennzeichnet, dass** die Aktivierung jedes weiteren Modus der Menge von dem Zwischengerät oder einem der Endgeräte durchgeführt wird.

14. Verfahren nach Anspruch 13, **dadurch gekennzeichnet, dass** die Aktivierung jedes weiteren Modus der Menge durch das Zwischengerät eine Änderung des Wertes mindestens eines Bits in einem Paket-Header umfasst, wobei die Änderung durch eines der Endgeräte erkennbar ist.

15. Verfahren nach einem der Ansprüche 1 bis 14, **dadurch gekennzeichnet, dass** die Verbindung eine Mehrwegverbindung ist, und dadurch, dass der Weg aus einer Hinzufügung von Weg in der Mehrwegverbindung resultiert, wobei die Hinzufügung von Weg durch eine Aktivierung eines weiteren Modus ausgelöst worden ist, der ein einzelner Modus ist oder Teil einer weiteren Menge von Modi ist, die zwischen den Endgeräten und einem weiteren Zwischengerät, das auf einem weiteren Weg zwischen den Endgeräten vorhanden ist, vereinbart wird.

16. Computerprogrammprodukt (630), welches Programmcodeanweisungen für die Durchführung des Verfahrens nach einem der Ansprüche 1 bis 15, wenn das Programm von einem Prozessor (61) ausgeführt wird, umfasst.

17. System zur Überwachung einer Verbindung zwischen Endgeräten (21, 23) über ein Kommunikationsnetz, in dem eine Menge von Modi, die mindestens zwei Überwachungsmodi umfasst, und eine der Menge von Modi zugeordnete Rangfolge von einem zufälligen oder vorbestimmten Typ zwischen den Endgeräten und einem Zwischengerät (22), das auf einem Weg zwischen den Endgeräten vorhanden ist, vereinbart werden, wobei jeder Überwachungsmodus mindestens einen Mechanismus umfasst, der von mindestens einem der Endgeräte angewendet wird und dem Zwischengerät ermöglicht, mindestens eine Funktion der Überwachung der Verbindung auszuführen, wobei das System **dadurch gekennzeichnet ist, dass** es umfasst:
- Mittel (61, 62, 63) zur anfänglichen Aktivierung der Menge von Modi, welche einer Aktivierung des ersten Modus gemäß der Rangfolge entspricht; und
- Mittel zur Aktivierung (61, 62, 63), gemäß der Rangfolge, jedes weiteren Modus der Menge von Modi, welche einem Übergang von einem Modus der Menge zum anderen gemäß der Rangfolge entspricht;
und dadurch, dass jeder Überwachungsmodus mindestens einen Mechanismus umfasst, der von mindestens einem der Endgeräte angewendet wird und dem Zwischengerät ermöglicht, mindestens eine Funktion der Überwachung der Verbindung auszuführen.

18. System nach Anspruch 17, **dadurch gekennzeichnet, dass** das Zwischengerät oder eines der Endgeräte eine wiederprogrammierbare Rechenmaschine (61, 62) und/oder eine dedizierte Rechenmaschine umfasst, die dafür ausgelegt ist, die Mittel zur Aktivierung der Menge von Modi und die Mittel zur Aktivierung jedes weiteren Modus der Menge von Modi zu implementieren.

## Claims

1. Method for monitoring a connection between terminal equipments (21, 23) via a communication network, **characterized in that** a set of modes, comprising at least two monitoring modes, and a classification order associated with said set of modes, are agreed on (51) between the terminal equipments and a middlebox (22) which is present on a path between the terminal equipments, said classification order being random or predetermined, and **in that** the method comprises:
- initially activating (52) said set of modes, corresponding to activating the first mode in said classification order; then
- activating (53), in said classification order, every other mode in said set of modes, corresponding to moving from one mode to another in said set in said classification order;
and **in that** each monitoring mode comprises at least one mechanism implemented by at least one of the terminal equipments and making it possible for said middlebox to perform at least one function of monitoring said connection.

2. Method according to Claim 1, **characterized in that** at least one of said monitoring modes comprises at least two mechanisms implemented simultaneously by at least one of the terminal equipments, each making it possible for said middlebox to perform at least one distinct monitoring function.

3. Method according to Claim 1 or 2, **characterized in that** said at least one monitoring function belongs to the group comprising:
- measuring at least one time period;
- measuring loss of packets;
- measuring quality of service;
- measuring quality of experience; and
- sending at least one indication to the terminal equipments.

4. Method according to any one of Claims 1 to 3, **characterized in that** said at least one mechanism belongs to the group comprising:
- a mechanism for repeating and for inverting a particular bit in a packet header, wherein a first terminal equipment sets the particular bit to one or zero, then a second terminal equipment repeats the particular bit at one or zero, then the first terminal equipment inverts the value of the particular bit;
- a combination of a given mechanism belonging to the group and of a mechanism for additionally inserting a contextual indication of the applicability of said given mechanism;
- a mechanism for repeating and for inverting a particular bit in a packet header, wherein a terminal equipment repeatedly sets the particular bit to one or to zero;
- a mechanism for deactivating the encryption of the packet numbering;
- in the event that said connection is a multi-path connection, a mechanism for adding into said connection another path between the terminal equipments which does not encrypt the packet numbering;
- in the event that said connection is a multi-path connection, a mechanism for adding into said connection another path between the terminal equipments, another set of modes and an associated other classification order being agreed on, for said other path, between the terminal equipments and another middlebox which is present on said other path;
- a mechanism using at least one bit in a packet header to send at least one indication of network context;
- a mechanism for monitoring in the transport layer;
- a mechanism for monitoring in the application layer;
- a mechanism for repeating and for inverting a particular bit in a packet header, wherein a first terminal equipment sets the particular bit to one or zero, then a second terminal equipment repeats the particular bit at one or zero, then the first terminal equipment repeats the particular bit at one or zero, before keeping silent for at least one round-trip time.

5. Method according to any one of Claims 1 to 4, **characterized in that** at least one of said monitoring modes comprises at least one complementary function implemented by at least one of the terminal equipments.

6. Method according to Claim 5, **characterized in that** said at least one complementary function belongs to the group comprising:
- moving into a mode where one of the terminal equipments playing a receiver role does not request for the data not received to be retransmitted;
- moving into a mode where one of the terminal equipments playing a transmitter role does not transmit data waiting in a transmission buffer and moves to the following data;
- moving into a mode where one of the terminal equipments playing a transmitter role does not transmit waiting application data and moves to following application data;
- moving into a mode where one of the terminal equipments playing a transmitter role does not transmit data for a round-trip time; and
- one of the terminal equipments playing a transmitter role sending an indication of an increase in attributed network resources.

7. Method according to any one of Claims 1 to 6, **characterized in that**, before being agreed on between the terminal equipments and the middlebox, said set of modes and said associated classification order are proposed (31) by an equipment for managing said network (24), when the terminal equipments are attached to said communication network.

8. Method according to Claim 7, **characterized in that**, after having been proposed, said set of modes and/or said associated classification order is (are) modified (33, 34) by at least one equipment from among:
- the equipment for managing said network;
- at least one of the terminal equipments; and
- the middlebox.

9. Method according to any one of Claims 1 to 8, **characterized in that** said set of modes and said associated classification order are agreed on between the terminal equipments and the middlebox when the connection is made between the terminal equipments, then recorded in a session ticket, and **in that** said set of modes and said associated classification order which are agreed on can be reused when a session is resumed or during a new session.

10. Method according to any one of Claims 1 to 9, **characterized in that** said set of modes is activated by:
- the middlebox; or
- one of the terminal equipments, if at least one activation condition is met.

11. Method according to Claim 10, **characterized in that** the middlebox activating said set of modes comprises modifying the value of at least one bit in a packet header, said modification being able to be detected by one of the terminal equipments.

12. Method according to Claim 10, **characterized in that** said at least one activation condition concerns data exchanged and belongs to the group comprising:
- an amount of data not received by one of the terminal equipments playing a receiver role is above a predetermined first threshold;
- an amount of data retransmitted by one of the terminal equipments playing a transmitter role is above a predetermined second threshold;
- pre-congestion information is detected by one of the terminal equipments; and
- an amount of control data detected as corrupted by one of the terminal equipments is above a third threshold.

13. Method according to any one of Claims 1 to 12, **characterized in that** every other mode in said set is activated by the middlebox or one of the terminal equipments.

14. Method according to Claim 13, **characterized in that** the middlebox activating every other mode in said set comprises modifying the value of at least one bit in a packet header, said modification being able to be detected by one of the terminal equipments.

15. Method according to any one of Claims 1 to 14, **characterized in that** said connection is a multi-path connection and **in that** said path results from adding a path into said multi-path connection, said adding a path having been triggered by activating another mode which is unique or is part of another set of modes which is agreed on between the terminal equipments and another middlebox which is present on another path between the terminal equipments.

16. Computer program product (630), comprising program code instructions for implementing the method according to any one of Claims 1 to 15 when said program is executed by a processor (61).

17. System for monitoring a connection between terminal equipments (21, 23) via a communication network, wherein a set of modes comprising at least two monitoring modes, and a random or predetermined classification order associated with said set of modes, are agreed on between the terminal equipments and a middlebox (22) which is present on a path between the terminal equipments, each monitoring mode comprising at least one mechanism implemented by at least one of the terminal equipments and making it possible for said middlebox to perform at least one function of monitoring said connection, said system being **characterized in that** it comprises:
- means (61, 62, 63) for initially activating said set of modes, corresponding to activating the first mode in said classification order; and
- means (61, 62, 63) for activating, in said classification order, every other mode in said set of modes, corresponding to moving from one mode to another in said set in said classification order;
and **in that** each monitoring mode comprises at least one mechanism implemented by at least one of the terminal equipments and making it possible for said middlebox to perform at least one function of monitoring said connection.

18. System according to Claim 17, **characterized in that** said middlebox or one of the terminal equipments comprises a reprogrammable computing machine (61, 62) and/or a dedicated computing machine, configured to implement said means for activating said set of modes and said means for activating every other mode in said set of modes.
